# EUROPEAN PATENT SPECIFICATION

(11) **EP 1 350 053 B1**
(45) Date of publication and mention of the grant of the patent: **17.08.2005**
(21) Application number: 01270726.1
(22) Date of filing: 13.12.2001
(51) Int. Cl.: F16L 37/23, F16L 21/06, F16L 23/02, F16L 15/00

(54) **PIPE COUPLING**
ROHRKUPPLUNG
RACCORD DE TUYAUTERIE

(30) Priority: 14.12.2000 GB 0030472
(43) Date of publication of application: 08.10.2003
(73) Proprietor: BSW Limited, Lancaster LA1 4YR (GB)
(72) Inventor: WALMSLEY, Owen, Invernesshire PH31 4AS (GB); EMMETT, Robert, Wray, Near Lancaster LA2 8RG (GB)
(74) Representative: Ajello, Michael John
(86) International application number: PCT/GB2001/005497
(87) International publication number: WO 2002/048598

(56) References cited:
- EP-A- 0 241 195
- CH-A- 337 042
- US-A- 1 352 767
- US-A- 2 283 975
- US-A- 4 159 132
- PATENT ABSTRACTS OF JAPAN vol. 2000, no. 07, 29 September 2000 (2000-09-29) & JP 2000 104873 A (KINKI ISHIKO KK), 11 April 2000 (2000-04-11)

## Description

THIS INVENTION concerns couplings adapted to join and maintain, in close relationship, two aligned rods or pipes and prevent them from separating.

Typically, pipe couplings include relatively large diameter flanged members which grip the respective pipe end regions and which are held together by bolts. It is an object of the present invention to reduce considerably the outer diameter and weight of such couplings particularly for applications in which pipe ends must be joined without cumbersome and excessively heavy coupling assemblies.

Patent specification US 4 159 132 describes a sealed connector for two cylindrical members and having a pair of annular sleeves to surround the cylindrical members in sealing engagement therewith and having means to clamp the two sleeves together axially, the sleeves having peripheral toothed projections and having a common split outer sleeve with complimentary tooth projections which is introduced after the sleeves are clamped together whereupon a further annular outer sleeve surrounds the split sleeve to prevent the pair of annular sleeves from separating axially. Such an arrangement does not provide axial adjustment of the sleeves once clamped.

According to the present invention, there is provided a coupling comprising a pair of annular sleeves to be located respectively around a pair of aligned pipe end regions and movable relatively along the longitudinal axis of the coupling, means associated with each annular sleeve for gripping the outer circumferential surface of a respective pipe end region, a sleeve split longitudinally adapted commonly to surround the annular sleeves and means to place the split sleeve in axial tension thus to force the annular sleeves together to maintain a grip on the pipe end regions and prevent them from separating; characterised in that the split sleeve is threadedly connected to at least one of the annular sleeves thus to be axially adjustable relative thereto.

The split sleeve may be threadedly engaged with at least one of the annular sleeves thus to be axially adjustable relative thereto.

The split sleeve may be rotationally mounted on at least one of the annular sleeves but immovable axially thereon.

A third annular sleeve may be disposed between said two annular sleeves and have sealing engagement with the outer circumferential surfaces of the respective pipe end regions.

The gripping means of each annular sleeve may be a ball and ramp arrangement adapted to grip the outer circumferential surface of the associated pipe end region as the two annular sleeves are drawn together.

Of the ball and ramp arrangement the ball may be selected to be of a harder material than the pipe thus to form a non-reversible indentation in the latter as the annular sleeves are drawn together.

The split sleeve may have at least one recess to receive a bar to enable rotation of the split sleeve.

Clamping may be provided to draw the annular sleeves together axially, said clamping means being removable once the split sleeve has been placed in axial tension.

The clamping means may comprise a removable pair of split flanges to be located one at each end of the coupling and adapted to receive draw bolts for temporarily maintaining the coupling as the annular sleeves are drawn together.

The threaded engagement of the split sleeve on at least one of the annular sleeves may have a reverse taper to ensure that the opposed threaded members are maintained in engagement.

The split sleeve may be anchored in an annual recess be a nut threadedly engaged on one of the annular sleeves.

An embodiment of the invention will now be described by way of example only, with reference to the accompanying drawings, in which:-
Fig. 1 is a part cross-sectional view of a pipe coupling according to a first embodiment of the present invention when applied to the joining of a pair of aligned pipe ends;
Fig. 2 is an enlarged schematic cross-sectional view of a part of the coupling assembly illustrated in Fig. 1;
Fig. 3 is an end view of the coupling of Fig. 1;
and Fig. 4 is a view similar to Fig. 1 of a second embodiment.

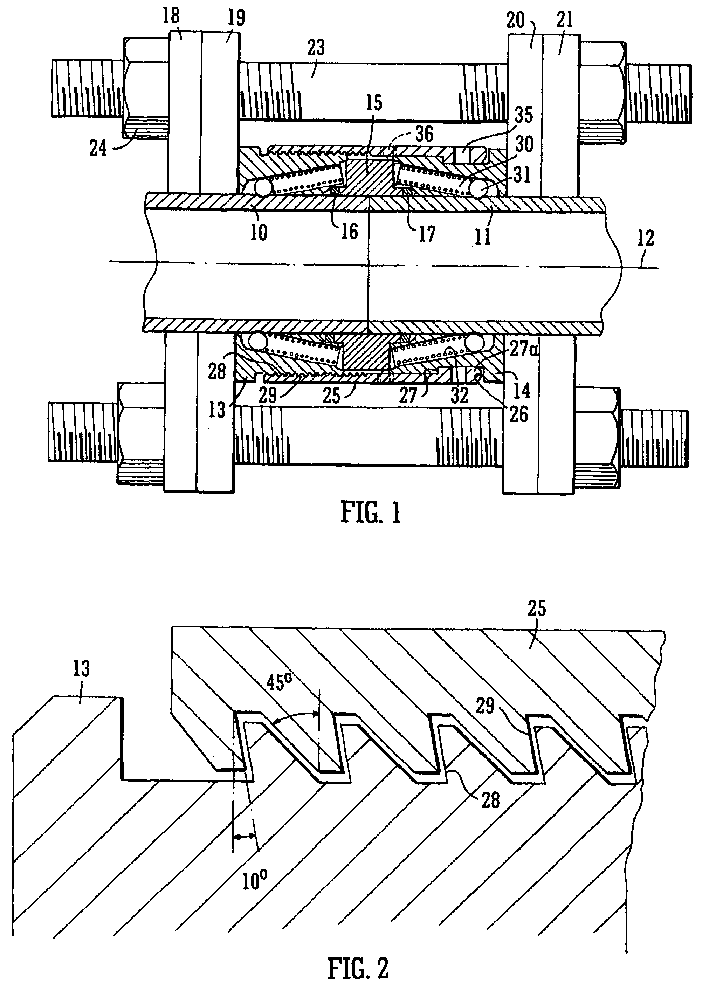

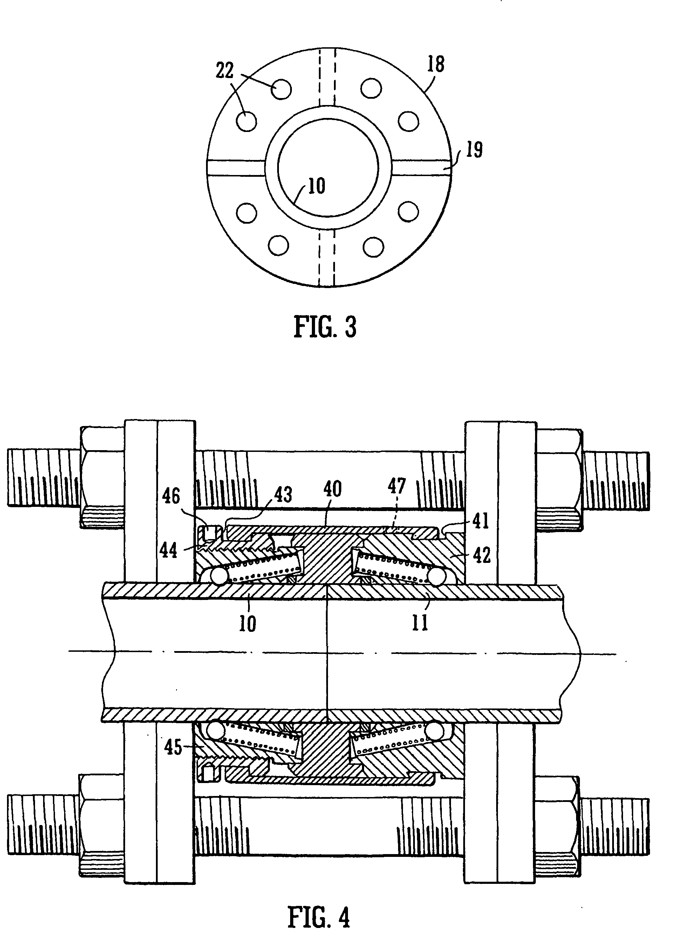

Referring now the drawings, a pipe coupling made in accordance with the first embodiment when applied to the junction of an aligned pair of pipe ends 10 and 11 having a common longitudinal axis 12 comprises a pair of annular sleeves 13 and 14 and a separate sleeve member 15 having resilient sealing rings 16 and 17. Sleeves 13, 14 and 15 are slid onto the pipes before they are joined (as shown in Fig. 1) so that they may be brought together in a close assembly in the region of the pipe joint. A first pair of split flanges 18 and 19 is also located on pipe 10 behind sleeve 13 and a second similar pair of flanges 20 and 21 is placed on the pipe 11 behind sleeve 14. As can be seen in Fig. 3, each of the flanges 18, 19, 20 and 21 is comprised of two semi-circular half flanges each with an array of holes 22 arranged around a central arc of the half flange. The half flanges of each pair 18, 19 and 20, 21 are arranged such that their splits are offset by 90° so that, for example, the split of flange 18 will lie horizontally in relation to the assembly of Fig. 1 while that of the flange 19 will lie vertically.

Bolts 23 and nuts 24 serve to draw the flanges 18, 19, 20 and 21 towards each other thus urging the sleeves 13, 14 and 15 into close engagement around the pipe joint.

A split sleeve 25 which is of generally cylindrical form but has a longitudinal slit at one position around its circumference, is located partly in a recess 26 of the annular sleeve 14, the recess being of outwardly tapering wall form at 27 i.e. at its inner end thus to anchor an inwardly enlarged boss 27a of the split sleeve 25 within the recess 26. The left-hand end region of sleeve 25, when viewed in Fig. 1, is internally threaded at 29 to engage the external thread 28 of annular sleeve 13.

Each annular sleeve 13, 14 has, around its circumference, a plurality of inclined ball slots 30 in which a ball 31 may travel, the ball being urged outwardly with respect to a centre line of the coupling by a spring 32. It will be seen therefore that each ball 31 becomes trapped between its respective slot 30 and the outer circumferential surface of the pipe wall whereby, as the annular sleeve is drawn towards the transverse centre line of the assembly, a gripping action is imposed by the ball 31 on the pipe walls.

The material of the balls 31 is chosen to be harder than that of the pipe wall so that as the coupling is assembled the balls 31 tend to bite into the pipe walls and thus prevent the pipes from separating.

The split sleeve 25 is bored in a number of positions around its circumference as illustrated at 35 for introduction of a tommy bar for a purpose to be described. Further bores 36 are internally threaded for a further purpose to be described.

Referring now to Fig. 2, it will be seen that the threads 28 and 29 are provided with a 10° reverse taper to ensure that the threads remain in engagement as the coupling is tightened. This is necessary in view of the split nature of the sleeve 25.

In the assembly of the coupling, once the parts are located on the pipe ends and the pipes are brought together then the bolts 23 are tightened initially to draw the annular sleeves 13, 14 and 15 into close contact over the centre line of the pipe joint. This has the effect of causing the balls 31 to grip the pipe walls thus preventing them from separating. During this assembly step, the split sleeve 25 will ride over the external thread of annular sleeve 13 owing to the ratchet effect of the inclined teeth of the threads and by virtue of the split nature of the sleeve 25.

The coupling is finally tightened by rotation of the split sleeve 25 (by inserting one or more tommy bars in the bores 35) until any slack in the parts of the coupling are taken up. Once the coupling is tightened in this way the flanges 18, 19, 20 and 21 and the bolts 23 and nuts 24 can be removed leaving a reduced weight and a reduced diameter coupling defined by the sleeves 13, 14 and 15 and the split sleeve 25.

To dismantle the coupling it is necessary to re-attach and tighten the temporary bolts and flanges in order to back off the load from the threaded split sleeve before it can be removed using jacking screws inserted in the tapped bores 36.

Referring now to Fig. 4, in an alternative arrangement, the split sleeve 40 is anchored at both of its ends respectively in an annular recess 41 in annual sleeve 42 and an annular recess 43 in a nut 44 threadedly engaged upon the other annular sleeve 45. In this case, the nut 44 is provided with a plurality of bores 46 into which one or more tommy bars may be inserted for tightening. It will be seen, that in this embodiment the split sleeve 40 is placed under tension not by its threaded relationship with one of the annular sleeves but by its anchored relationship with the nut 44 which in turn is threadedly engaged on the annular sleeve 45. Once again, the external flanges and bolts are used to pre-assemble the coupling before it is finally tightened using nut 44 to place the split sleeve 40 under tension.

Once again, the split sleeve 40 has a number of tapped bores 47 for the insertion of jacking screws for the removal of the split sleeve 40 when the coupling is to be dismantled, the tension in the sleeve 40 having been relieved by re-introduction of the removable flanges and bolts.

It is not intended to limit the invention to pipes. For example, a solid rod or, for example, a drive shaft may be joined by such a coupling which therefore has minimal radial extent and reduced balancing requirements. Any close-coupled means may be provided for axially tensioning the split sleeve.

## Claims

1. A coupling comprising a pair of annular sleeves (13, 14, 42, 45) to be located respectively around a pair of aligned pipe end regions (10, 11) and movable relatively along the longitudinal axis (12) of the coupling, means (30, 31) associated with each annular sleeve for gripping the outer circumferential surface of a respective pipe end region, a sleeve (25, 40) split longitudinally adapted commonly to surround the annular sleeves (13, 14, 42, 45), and means (28, 29, 35, 46) to place the split sleeve (25, 40) in axial tension and to force the annular sleeves (13, 14, 42, 45) together to maintain a grip on the pipe end regions and prevent them from separating; **characterized in that** the split sleeve (25,40) is threadedly connected to at least one of the annular sleeves (13,14, 42, 45) thus to be axially adjustable relative thereto.

2. A coupling according to Claim 1, wherein the split sleeve (25) is threadedly engaged with at least one of the annular sleeves (13) thus to be axially adjustable relative thereto.

3. A coupling according to any preceding claim, wherein the split sleeve (25) is rotationally mounted on at least one of the annular sleeves (14) but immovable axially thereon.

4. A coupling according to any preceding claim, including a third annular sleeve (15) disposed between said two annular sleeves (13, 14, 42, 45) and having sealing engagement (16, 17) with the outer circumferential surfaces of the respective pipe end regions (10, 11).

5. A coupling according to any preceding claim, wherein the gripping means of each annular sleeve is a ball and ramp arrangement (30, 31) adapted to grip the outer circumferential surface of the associated pipe end region (10, 11) as the annular sleeves (13, 14, 42, 45) are drawn together.

6. A coupling according to Claim 5, wherein, of the ball and ramp arrangement, the ball (31) is selected to be of harder material than the pipe (10, 11) thus to form a non-reversible indentation in the latter as the annular sleeves (13, 14, 42, 45) are drawn together.

7. A coupling according to any preceding claim, wherein the split sleeve (25) has at least one recess (35) to receive a bar to enable rotation of the split sleeve.

8. A coupling according to any preceding claim, including clamping means (18, 19, 20, 21, 23) to draw the annular sleeves (13, 14, 42, 45) together axially, said clamping means being removable once the split sleeve (25, 40) has been placed in axial tension.

9. A coupling according to Claim 8, wherein the clamping means comprises a removable pair of split flanges (18, 19, 20, 21) to be located one at each end of the coupling and adapted to receive draw bolts (23) for temporarily maintaining the coupling as the annular sleeves (13, 14, 42, 45) are drawn together.

10. A coupling according to Claim 2, wherein the threaded engagement of the split sleeve (25) on at least one of the annular sleeves (13) has a reverse taper (28, 29) to ensure that the opposed threaded members are maintained in engagement.

11. A coupling according to Claim 1, wherein the split sleeve (40) is anchored in an annular recess (43) in a nut (44) threadedly engaged upon one of the annular sleeves (45).

## Patentansprüche

1. Kupplung mit einem Paar ringförmiger Büchsen (13, 14, 42, 45), die um ein Paar ausgerichtete Rohrendgebiete (10, 11) anzuordnen sind und längs der Längsachse (12) der Kupplung relativbeweglich sind, einer Einrichtung (30, 31), die jeder ringförmigen Büchse zugeordnet ist, zum Erfassen der äußeren Umfangsoberfläche jeweils eines der Rohrendgebiete, einer Büchse (25, 40), die in Längsrichtung geteilt ist und die dafür ausgebildet ist, die ringförmigen Büchsen (13, 14, 42, 45) gemeinsam zu umschließen, und einer Einrichtung (28, 29, 35, 46), mittels welcher die geteilte Büchse (25, 40) unter axiale Zugspannung setzbar ist und die ringförmigen Büchsen (13, 14, 42, 45) zusammendrängbar sind, um das Erfassen der Rohrendgebiete aufrechtzuerhalten und diese am Trennen zu hindern, **dadurch gekennzeichnet, dass** die geteilte Büchse (25, 40) durch Gewindeeingriff mit wenigstens einer der ringförmigen Büchsen (13, 14, 42, 45) verbunden ist, so dass sie relativ zu dieser axial einstellbar ist.

2. Kupplung nach Anspruch 1, wobei die geteilte Büchse (25) mit wenigstens einer der ringförmigen Büchsen (13) in Gewindeeingriff ist, so dass sie relativ zu dieser axial einstellbar ist.

3. Kupplung nach einem der vorhergehenden Ansprüche, wobei die geteilte Büchse (25) auf wenigstens einer der ringförmigen Büchsen (14) drehbar befestigt ist, aber auf derselben axial unbeweglich ist.

4. Kupplung nach einem der vorhergehenden Ansprüche, mit einer dritten ringförmigen Büchse (15), die zwischen den beiden ringförmigen Büchsen (13, 14, 42, 45) angeordnet ist und in Dichtberührung (16, 17) mit den äußeren Umfangsoberflächen der Rohrendgebiete (10,11) ist.

5. Kupplung nach einem der vorhergehenden Ansprüche, wobei die Erfassungseinrichtung jeder ringförmigen Büchse eine Kugel- und Rampenanordnung (30, 31) ist, die dafür ausgebildet ist, die äußere Umfangsoberfläche des zugeordneten Rohrendgebietes (10, 11) zu erfassen, wenn die ringförmigen Büchsen (13, 14, 42, 45) zusammengezogenwerden.

6. Kupplung nach Anspruch 5, wobei die Kugel (31) der Kugel- und Rampenanordnung so ausgewählt ist, dass sie aus einem härteren Werkstoff als das Rohr (10, 11) ist, um so eine irreversible Vertiefung in letzterem zu bilden, wenn die ringförmigen Büchsen (13, 14, 42, 45) zusammengezogen werden.

7. Kupplung nach einem der vorhergehenden Ansprüche, wobei die geteilte Büchse (25) wenigstens eine Ausnehmung (35) zum Aufnehmen eines Stiftes hat, um das Drehen der geteilten Büchse zu ermöglichen.

8. Kupplung nach einem der vorhergehenden Ansprüche, mit einer Spanneinrichtung (18, 19, 20, 21, 23) zum axialen Zusammenziehen der ringförmigen Büchsen (13, 14, 42, 45), wobei die Spanneinrichtung entfembar ist, nachdem die geteilte Büchse (25, 40) unter axiale Zugspannung gesetzt worden ist.

9. Kupplung nach Anspruch 8, wobei die Spanneinrichtung ein entfernbares Paar geteilte Flansche (18, 19, 20, 21) aufweist, die jeweils an einem Ende der Kupplung anzuordnen sind und die dafür ausgebildet sind, Zugschraubenbolzen (23) zum vorübergehenden Halten der Kupplung aufzunehmen, wenn die ringförmigen Büchsen (13, 14, 42, 45) zusammengezogen werden.

10. Kupplung nach Anspruch 2, wobei der Gewindeeingriff der geteilten Büchse (25) auf wenigstens einer der ringförmigen Büchsen (13) eine Hinterschneidung (28, 29) hat, um sicherzustellen, dass die entgegengesetzten Gewindeteile in Eingriff gehalten werden.

11. Kupplung nach Anspruch 1, wobei die geteilte Büchse (40) in einer ringförmigen Ausnehmung (43) in einer Mutter (44) verankert ist, die mit einer der ringförmigen Büchsen (45) in Gewindeeingriff ist.

## Revendications

1. Couplage comprenant une paire de manchons annulaires (13, 14, 42, 45) à positionner respectivement autour d'une paire de régions d'extrémité de tuyaux alignés (10, 11) et déplaçable relativement le long de l'axe longitudinal (12) du couplage, des moyens (30, 31) associés à chaque manchon annulaire pour venir en prise avec la surface circonférentielle externe d'une région d'extrémité de tuyaux respective, un manchon (25, 40) fendu de manière longitudinale adapté à entourer de manière commune les manchons annulaires (13, 14, 42, 45), et des moyens (28, 29, 35, 46) pour placer le manchon fendu (25, 40) sous tension axiale et pour forcer les manchons annulaires (13, 14, 42, 45) à maintenir ensemble une prise sur les régions d'extrémité de tuyau et les empêcher de se séparer ; **caractérisé en ce que** le manchon fendu (25, 40) est connecté en prise filetée à au moins un manchon parmi les manchons annulaires (13, 14, 42, 45) de manière à être axialement ajustable par rapport à ceux-ci.

2. Couplage selon la revendication 1, dans lequel le manchon fendu (25) est engagé en prise filetée avec au moins un parmi les manchons annulaires (13) de manière à être axialement ajustable par rapport à ceux-ci.

3. Couplage selon l'une quelconque des revendications précédentes, dans lequel le manchon fendu (25) est monté de manière rotative sur au moins un des manchons annulaires (14) mais est immobile axialement sur celui-ci.

4. Couplage selon l'une quelconque des revendications précédentes, comprenant un troisième manchon annulaire (15) disposé entre les deux manchons annulaires (13, 14, 42, 45) et ayant une prise étanchéifiante (16,17) avec les surfaces circonférentielles externes des régions d'extrémité de tuyau respectives (10, 11).

5. Couplage selon l'une quelconque des revendications précédentes, dans lequel les moyens de prise de chaque manchon annulaire sont un arrangement à bille et à rampe (30, 31) adapté à venir en prise avec la surface circonférentielle externe de la région d'extrémité de tuyau associée (10, 11) lorsque les manchons annulaires (13, 14, 42, 45) sont tirés ensemble.

6. Couplage selon la revendication 5, dans lequel parmi l'arrangement à bille et à rampe, la bille (31) est choisie de manière à être un matériau plus dur que le tuyau (10, 11) pour ainsi former une indentation non réversible dans ce dernier lorsque les manchons annulaires (13, 14, 42, 45) sont tirés ensemble.

7. Couplage selon l'une quelconque des revendications précédentes, dans lequel le manchon fendu (25) présente au moins un évidement (35) pour recevoir une barre pour permettre une rotation du manchon fendu.

8. Couplage selon l'une quelconque des revendications précédentes, comprenant des moyens de serrage (18, 19, 20, 21, 23) pour tirer les manchons annulaires (13, 14, 42, 45) axialement ensemble, lesdits moyens de serrage étant amovibles une fois que le manchon fendu (25, 40) a été placé sous tension axiale.

9. Couplage selon la revendication 8, dans lequel les moyens de serrage comprennent une paire de brides fendues amovibles (18, 19, 20, 21) à positionner à chaque extrémité du couplage et adaptées à recevoir des boulons (23) pour maintenir de manière temporaire le couplage lorsque les manchons annulaires (13,14,42,45) sont tirés ensemble.

10. Couplage selon la revendication 2, dans lequel la venue en prise filetée du manchon fendu (25) sur au moins un des manchons annulaires (13) comporte un cône inversé (28, 29) pour s'assurer que les éléments filetés opposés sont maintenus en prise.

11. Couplage selon la revendication 1, dans lequel le manchon fendu (40) est ancré dans un évidement annulaire (43) dans un écrou (44) en prise filetée sur un des manchons annulaires (45).
